# EUROPEAN PATENT APPLICATION

(11) **EP 3 366 599 A1**
(43) Date of publication of application: **29.08.2018**
(21) Application number: 17158011.1
(22) Date of filing: 24.02.2017
(51) Int. Cl.: B65D 1/04, B65D 1/06, B65D 81/32, B65D 77/04, B65D 83/00

(54) **MULTI-VOLUME CONTAINER AND METHOD FOR PRODUCING A MULTI-VOLUME CONTAINER**

(71) Applicant: Corpack GmbH, 80999 München (DE)
(72) Inventor: CORBEIL, Jean Paul, 81247 München (DE); PRASTER, Jochen, 81545 München (DE)
(74) Representative: Fleuchaus, Michael A.

(57) **Abstract**

In a multi-volume container (100) made of a first (200) and at least a second (300) element, the first element comprises a first mantle portion (210) which defines a first internal volume (220) and has a first (230) and a second (240) opening. The second element comprises a second mantle portion (310) which defines a second internal volume (320) and has a third opening (330). The second element is at least partially arranged inside the first internal volume, with the two elements in a substantially affixed spatial arrangement such that the first opening at least partially overlaps the third opening. A fluid tight separation between the first (230) and the second (240) opening of the first element (200) is provided.

A method for producing said container by blow-moulding is also disclosed.

## Description

The present invention refers to containers for storing, transporting and/or dispensing dispensable products. More particularly, the present invention refers to multi-volume containers for storing, transporting and/or dispensing a plurality of dispensable products and to methods for manufacturing such containers.

Dispensable products are generally fluid products, granular products or combinations thereof. A fluid product may for instance be a liquid, a gel, a paste, and/or a gas-liquid phase (e.g. sparkling water, soft drinks and the like). A granular product may for instance comprise a powder, or an ensemble of relatively small elements, spheres, grains, etc., such as, for example, salt crystals and the like. Dispensable products may for instance be drinkable and/or edible products (beverages, water, gravies, sauces, syrups, cream, salt, pepper, spices, sugar, peppercorn, candies, and the like), non-edible and non-drinkable products (cosmetics, makeup or perfume products, lotions, shampoos, conditioners, petrol, washing powders, detergents, additives, bath pearls, bath flakes, toothpaste, and the like), and/or pharmaceutical products (pills, medicine syrup, suppositories, and the like).

Multi-volume containers, such as, for example, two-volume containers, are known in the art. Such containers comprise at least two - generally separate - compartments, wherein each compartment comprises an opening for dispensing a dispensable product. The two compartments are often complementary in form and mostly releasably connected to one another via, e.g., snap- or slide-in connections. Often, the two compartments are positively fitted to one another and constitute a two-volume container allowing for the separate storing of two dispensable products and for the independent dispensing of the dispensable products stored therein.

However, such known multi-volume containers have the disadvantage that the two compartments are ultimately two individual single-volume containers. The individual containers generally need to fulfil certain requirements in their structural stability given they are usually produced independently from each other (e.g., by injection moulding, extrusion blow moulding, injection blow moulding and the like) and later assembled in a separate assembly process.

This renders the production of prior art multi-volume containers inherently complex and costly; often the production costs are much higher than for similar single volume containers due to the additional assembly process and the specific physical requirements these containers need to fulfil. Also, the production methods need to fulfil higher quality requirements to ensure that the two compartments can be reliably assembled without error.

It is thus an object of the present invention to provide a multi-volume container and a method for manufacturing such a container, which at least partially overcome the drawbacks of the prior art.

This object is solved by a multi-volume container according to claim 1 and by the a method for producing such a multi-volume container according to claim 12. Embodiments of the invention are subject matter of the dependent claims.

Accordingly, a multi-volume container of the invention is made of a first element and of at least a second element. In particular, the multi-volume container may serve for storing, transporting and/or dispensing dispensable products. The first element comprises a first mantle portion, the first mantle portion defining a first internal volume and having a first and a second opening. The first opening and the second openings are defined by a first and a second boundary region, respectively.

For example, the first element may be double-mouthed bottle, that is a bottle having a body, a first and a second mouth. Such exemplary body comprises a first and a second bottleneck, the first and the second bottlenecks defining the first and the second mouth, respectively. In such case the body, the first, and the second mouths would be considered to constitute the first mantle portion, the first opening, and the second opening, respectively. The first and the second boundary region would be considered to represent the first and the second bottleneck, respectively.

Alternatively, the first element can also be of a jar-like form, it having a substantially tubular body, a first, and a second mouth. Such exemplary tubular body has a first and a second side region, which have the form of a cylindrical band. The tubular body, the first mouth and the second mouth would be considered to constitute the first mantle portion, the first, and the second opening, respectively, while the first and the second side region would be considered to represent the first and the second boundary region, respectively.

The second element comprises a second mantle portion, wherein the second mantle portion defines a second internal volume and having a third opening, the third opening being defined by a third boundary region.

The second element may for instance be a single-mouthed bottle, that is a bottle with a body and a mouth. Such exemplary body and the mouth would be considered to constitute the second mantle portion and the third opening, respectively. In such case the body would be considered to comprise a base and a bottleneck, wherein the bottleneck defines the mouth and constitutes the third boundary region. The base and the mouth may be in a substantially opposing arrangement with respect to one another.

The second element may also be of a jar-like form with a substantially trough-shaped body and a mouth, wherein the mouth may be defined by a cylindrical side region of the body. In such case, the third opening and the third boundary region would be considered to represent the mouth and the side region of the jar, respectively.

At least a portion of the second element is arranged inside the first internal volume. In particular, the second element may be located completely inside the first internal volume.

The first and the second elements are in a substantially affixed spatial arrangement relative to one another so that the first opening at least partially overlaps the third opening. In particular, the first opening may substantially coincide with the third opening. The first opening at least partially overlaps the third opening if for instance a dispensable product, e.g. a fluid product, stored in the second internal volume can be dispensed by letting it pass through the first and the third openings.

The substantially affixed spatial arrangement may be achieved by putting the first and the third boundary regions in a firm connective contact with each other, such as by welding, by gluing, and/or by a force or positive fit. The first and the third opening may substantially overlap one another even if, e.g., the first and the third boundary region are not in contact with one another. The overlap between the first and the third opening may also be achieved if only a portion of the first boundary region is in contact with a portion of the third boundary region.

At least a first portion of the first mantle portion is in intimate contact with at least a first portion of the second mantle portion. The first portion of the first mantle portion and the first portion of the second mantle region are henceforth called "first contact portion" and "second contact portion", respectively.

Intimate contact in the sense of the present invention is considered as being a contact along a surface, that is, preferably along a two dimensionally extending plane which may be flat or curved. In addition, an intimate contact in the sense of the present invention is considered as being a contact which is preferably upheld by adhesive or other forces resulting in a certain mechanical stability between the mantle portions that share such intimate contact.

At least a second portion of the second mantle portion constitutes a septum, the septum providing a fluid tight separation between the first and the second opening of the first element.

The septum is preferably a fluid tight separator, e.g. a diaphragm, separating the second internal volume and a storage region of the first internal volume, the storage region being the region, which is not occupied by the first element. Further, the septum may be of a membrane nature, that is, it may be constituted of a very thin layer of material. In addition to this, the septum may be flexible and/or it may be displaceable, for example, by the dispensable product located in the first internal volume and/or the second internal volume.

In particular, the septum may be located inside the first internal volume. For example, it may be located completely inside the first internal volume.

For example, assuming the first and the second element would be represented by the above-described double-mouthed and single-mouthed bottles, respectively, the single-mouthed bottle could then be considered as being located inside the first internal volume of the double-mouthed bottle in a "bottle in a bottle" arrangement. In such case, the bottleneck of the single-mouthed bottle would be located inside the first bottleneck of the double-mouthed bottle and a fluid-tight connect would exist there-between, such as a force fit, a positive and/or a material connection. The mouth of the single-mouthed bottle would substantially overlap the first mouth of the double-mouthed bottle, so as to enable a dispensable product, such as, a fluid product stored in the second internal volume of the single-mouthed bottle to be dispensed by letting it pass through the first mouth and the mouth of the single-mouthed bottle.

Apart for its base, the body of the single-mouthed bottle may be in intimate contact with a contact region of the body of the double-mouthed bottle and fluid tightly connected therewith via a positive connection, wherein the contact region does not comprise the second bottleneck. In this case, the body of the single-mouthed bottle and the contact region correspond to the second and to the first contact portion, respectively. The base of the single-mouthed bottle would be considered constituting the septum providing the fluid tight separation between the first and the second bottleneck of the double-mouthed bottle.

The multi-volume container according to the present invention comprises two or more separate compartments (e.g. the second internal volume and the storage region of the first internal volume), said two compartments communicating with the exterior via two openings (the second and the third opening). Therefore, the multi-volume container allows for storing separately, and dispensing independent of a first and at least a second dispensable product.

In particular the two dispensable products may be linked by the circumstances in which they are needed and used. For example, the first and the second dispensable product may be edible and/or drinkable products (e.g. ketchup and mayonnaise, salt and pepper, milk and coffee), non-edible and non-drinkable products (e.g. shampoo and conditioner, detergent and rinse agent, baby oil and baby powder), or pharmaceutical products (e.g. a medicine syrup and an ensemble of pills, a first and a second medicine syrup).

In an embodiment, portions of the second element, such as, for example, the second mantle portion, are in intimate contact with the first element and/or are located inside the first internal volume. Through the intimate contact, the portions may structurally support each other and/or be protected by the first mantle portion. Therefore, the structural requirements of the second element may be relatively lenient and may be fulfilled even if it's mantle portion is designed relatively thin walled, so that an amount of the material constituting said element, e.g. a plastic material, may be chosen relatively small. This may reduce the production and/or the disposal costs of the multi-volume containers according to the present invention, and may also help meeting environmental constraints.

An embodiment of the multi-volume container according to the present invention may comprise a third element, the third element comprising a third mantle region, as well as a fourth and a fifth opening. The third element may be similar to the first element and of a substantially like shape so as to define an envelope around the first element. Most of the third mantle portion may be in intimate contact with the first mantle portion.

The fourth and the fifth openings are defined by a fourth and a fifth boundary region, respectively. For example, the second and/or the third mantle portions may be made of polypropylene (PP) while the first mantle portion may be made of polyethylene terephthalate (PET).

The first and the third elements are in a substantially affixed spatial arrangement relative to one another so that the first opening at least partially overlaps the fourth opening and the second opening at least partially overlaps the fifth one. In particular, the first and/or the second opening may substantially coincide with the fourth and/orthe fifth opening, respectively.

In an embodiment of the multi-volume container according to the present invention the first, the second, and/orthe third openings are formed by substantially flat apertures. For example, the first and/orthe second opening may be a hole of the first mantle portion, while the third opening may be a hole of the second mantle portion. In such case, the first, the second and/orthe third boundary regions may in particular be the border regions delimiting the first, second and/orthe third opening, respectively.

In a further embodiment of the multi-volume container according to the present invention the first, the second, and/orthe third openings are substantially cylindrical or circular in shape. Circular and/or cylindrical openings are particularly easy to produce by e.g. extrusion and/or injection blow moulding. Moreover, they can be easily closed by e.g. a bung, threaded cap, disc top, and/or a pump to prevent unwanted spillage of fluid products.

The first and the third opening may be coplanar and/or concentric to one another. For example, the first and the third opening may be substantially identical to each other, e.g. the length of the diameter of the first opening may be substantially equal to the length of the diameter of the third opening, i.e. the diameter substantially only deviating by the material thickness at the boundary region of the third opening.

In another embodiment, the first and the second openings may be substantially parallel with each other and/or may be arranged in a substantially opposing spatial relationship. In particular, these two openings may be substantially identical to one another, i.e. the length of the diameter of the first opening may be substantially equal to the length of the diameter of the third opening and/or the general shape of the opening, e.g. a cylindrical shape, may also be similar.

For example, with reference to the aforementioned "bottle in a bottle" arrangement, the mouth of the single-mouthed bottle and the two mouths of the double-mouthed bottle are substantially cylindrical. The mouth of the single-mouthed bottle is substantially concentric with the first mouth of the double-mouthed bottle, since the bottleneck of the single-mouthed bottle is inserted in the first bottleneck of the double-mouthed bottle and positively fitted therein. In this case, the mouth of the single-mouthed bottle is slightly smaller than the first mouth of the double-mouthed one, since the bottleneck of the single mouthed bottle is arranged at the inner diameter of the first bottleneck of the double-mouthed bottle.

In an embodiment, the first, the second, and the third opening may be substantially cylindrical if the first, the second, and the third boundary region have a substantially cylindrical symmetry, respectively. This would also be the case in a "bottle in a bottle" arrangement, as described.

In another embodiment of the multi-volume container according to the present invention, the first, the second, and/orthe third boundary regions are neck shaped. A neck-shaped boundary region improves the accuracy of the dispensing of a dispensable product, e.g. of a fluid product, since it enables a user of the multi-volume container to easily control the flux of the dispensable product, e.g. of the fluid product, passing through the opening defined by the neck-shaped boundary region.

Neck-shaped boundary regions, e.g. bottlenecks, may comprise a distal region, which may be threaded so as to allow, for example, a cap, a pump, and/or a disc top being screwed onto it. Neck-shaped boundary regions may have a substantially cylindrical symmetry and may extend along a certain length/direction. In to the present invention, the extension direction of a neck-shaped boundary region, e.g. of a bottleneck, is the direction along which said neck extends.

Again, referring to the exemplary "bottle in a bottle" arrangement, the first, the second, and the third boundary regions are neck shaped, given they are bottlenecks. The first bottleneck of the double-mouthed and the bottleneck of the single-mouthed bottle extend along a common direction, since the bottleneck of the single mouthed bottle is arrange inside the first bottleneck of the double-mouthed bottle and substantially positively fitted thereto.

In another embodiment of the present invention, the first, the second, and/or the third boundary regions are shaped as a collar. In particular, the first, the second, and/orthe third boundary regions may be shaped as a collar with a partially cylindrical symmetry. In addition, the collar may comprise a collar band with a distal edge and a collar leaf. The collar leaf is connected to the distal edge of the collar band so as to define a collar recess (e.g. a groove) therewith.

Collar-shaped boundary regions may improve the stability of the boundary regions of the first, second and/orthird openings, and, in addition to this, may provide an advantageous means to connect the boundary regions with one another. Further, collar shaped boundary regions may help to allow better control of a fluid dispensing action of fluids stored in the multi-volume container, since they can be shaped as drip-preventing systems to help preventing fluid spill when dispensed from the corresponding opening.

In yet another embodiment of the multi-volume container according to the present invention, the first and the third boundary regions may be interlocked with one another. For instance, if the third boundary region is collar-shaped and the first boundary region is neck-shaped, e.g. in a bottleneck form, the distal region of said neck may engage the collar recess of the third boundary region so as to interlock the bottleneck with the collar.

In an embodiment of the multi-volume containeraccordingthe present invention, the first and the second opening are in a substantially opposing arrangement. This arrangement is particularly advantageous if the multi-volume container stores a first and a second fluid product. If, for example, the first and the second fluid products are stored in the first and in the second internal volume, respectively. The aforementioned substantially opposing arrangement allows for a simplified use in the dispensing the first or the second dispensable fluid product through the second and the third opening, respectively.

If the first and the second boundary region are neck shaped, the first and the second opening are in a substantially opposing arrangement when e.g. the extension direction of the first boundary region and the extension direction of the second boundary region are substantially parallel but in substantially opposing directions.

In another embodiment of the present invention, the multi-volume container comprises a first closing element, wherein the first and/or the third opening are sealable by means of said first closing element. Alternatively or in conjunction therewith, the multi-volume container comprises a second closing element, wherein the second opening is sealable by means of the second closing element.

The first and/or the third opening are e.g. sealable by means of the first closing element if said closing element engages the first and/or the third boundary region so as to substantially prevent the dispensable product stored in the second internal volume from passing through the first and/orthe third opening. Similarly, the second opening is, in particular, sealable by means of the second closing element if the second closing element may engage the second boundary region to substantially prevent the dispensable product stored in the first internal volume from passing through the second opening.

Preferably, the first and/or second closing elements enable sealing of the first/third and/orthe second openings in a fluid tight manner so as to prevent dispensable fluid products from passing through the first/third and/orthe second openings also in cases where the fluid product may be pressurized to a certain extent. This way at least one of the two compartments of the multi-volume container according to the present invention may constitute an aerosol and/or a gas pressure unit.

For example, the first and the second closing elements may for instance be formed by a first and a second bung (e.g. a first and a second cork), respectively, where the first and the second bung may be engaging, and thus substantially shutting the first/third and/or second openings, respectively, and, in particular, their respective boundary regions. The first and the second bung may form a positive fit with the openings and/or the boundary regions of the first/third and/or second openings, respectively.

Further, if the first boundary region and/orthe third boundary region have a neck shape with a threaded distal region, the first closing element may be a cap, a pump, and/or a disc top, which, for example, may be screwed on the distal region of the neck to close the first and/or the third opening. Similarly, if the second boundary region has a neck shape with a threaded distal region, the second closing element may be a cap, a disc top, and/or a pump, said cap, disc top, and/or a pump being screwable and/or snap fittable on this distal region to close the second opening.

In particular, the first and/or the second closing element may be an assembly comprising at least a fastening element and a covering element (e.g. a cover, a lid and the like), wherein the fastening element is connected, e.g. releasably connected, with the first boundary region and/or the first mantle portion. The covering element may be movably connected to the fastening element so that the assembly has at least a dispensing and a closing state. For instance, the covering element may be connected to the fastening element by a hinge and may rotate thereabout.

The first and/or the second closing element may further comprise a valve, e.g. a dispensing and/or a non-dripping valve. The valves may be designed to open, and thus allow for dispensing fluid products, only when the pressure inside the second and/or inside the first internal volume is larger than a given threshold value, respectively.

In particular, the multi-volume container may comprise an airless and non-airless compartment, for example, if the septum is displaceable and/or deformable under e.g. the difference between the pressure of the dispensable product stored inside the second internal volume and the pressure of the dispensable product stored inside the storage region. Such a multi-volume container may e.g. comprise a disc top as first or second closing element and an airless pump as second or first closing element, respectively.

In an embodiment of the present invention, the multi-volume container may comprise a first and/or a second dosage element. The first dosage element may for instance engage the first and/orthe third boundary region via e.g. a screw fit and/or a snap fit so as to limit and/or regulate the flux of the dispensable product stored passing through the first and/orthe third opening. Similarly, the second dosage element may engage the second boundary region via e.g. a screw fit and/or a snap fit to limit and/or to regulate the flux of the dispensable product passing through the second opening.

For instance, the first and/or the second closing element may be a punctate cap comprising at least one hole, in particular a plurality of holes, for dispensing the dispensable product stored in the second and/or in the first internal volume respectively.

For example, a multi-volume container may comprise a disc top as a first closing element and a punctate cap as a second dosage element. Such container may e.g. be used to dispense baby oil stored in the second internal volume and baby powder stored in the storage region of the first internal volume. Alternatively with the above, the disc top and the punctate cap may constitute a second closing element and a first dosage element, respectively.

In a further embodiment of the multi-volume container, at least a first elastic portion of the first element and/or at least a second elastic portion of the second element are made of an elastic material. The first elastic portion and/or the second elastic portion may e.g. correspond to the entire first mantle portion and/or to the entire second mantle portion, respectively. In particular, the first elastic portion renders the first element compressible and/or squeezable, while the presence of the second elastic portion allows the second element to be compressed and/or squeezed.

If the first element comprises the first elastic portion, said element can be squeezed and/or compressed to facilitate the dispensing of a fluid product stored inside the first internal volume. This is particularly convenient when said fluid product has a relatively high viscosity, e.g. when the fluid product is a gel, a cream, a paste, and the like.

If the second opening is substantially sealed by a second closing element, the compression and/or the squeezing of the mantel portion of the first element increases the pressure inside the first internal volume and may allow for dispensing the first fluid product through the first/third openings. Likewise, if the first/third openings are substantially sealed by a first closing element, the compression and/orthe squeezing of the mantel portion of the first element, and thus potentially also the second mantle portion, increases the pressure inside the second internal volume and may allow for dispensing the second fluid product through the second opening.

The first elastic portion can also comprise several elastic sub-regions, wherein said elastic sub-regions may be spatially separated from each other. The first elastic portion and the second elastic portion may arranged with respect to one another so as a first elastic sub-region overlaps the second elastic portion while a second elastic sub-region does not. In particular, the first and second elastic portions and/or the elastic sub-regions may be designed to exhibit different levels of elasticity and thus allowing to cause dispensing of the dispensable products from the first or second internal volumes at different levels of force being exerted on the elastic portions, respectively.

For example, the second elastic region may be stiffer than the first elastic region. In this case, the fluid product to be dispensed may be easily and reliably selected by varying the force exerted on the first element by compression and/or by squeeze, said selection being possible even if the first elastic region substantially coincides with the second elastic region.

In an embodiment of the multi-volume container according to the present invention, the material constituting the first element and/or the material constituting the second element comprise a first and a second plastic material, respectively.

In an embodiment, the adherence forces between the first and the second plastic materials, and thus the adherence forces between the first and the second element, are relatively weak. This feature facilitates the production of the multi-volume container via the method accordingto the present invention, as described further below.

For example, this may be achieved if the first and the second plastic material have relatively bad mutual adhesion properties. For instance, if the first or the second plastic material is made of polyurethane, the second orthe first plastic material might preferably made of a polyolefin material such as polyethylene or polypropylene, respectively. The first and the second plastic material may also be selected from a third group comprising a High Density Polyethylene, Low Density Polyethylene, Polyethylene, Terephthalate, Polyvinyl Chloride, Polycarbonate, Polypropylene, Polystyrene, Fluorine Treated, Post Consumer Resin, K-Resin, Bio-plastic, or combinations thereof.

The first and/orthe second element may comprise further materials, or may be coated therewith, such as, for instance, additives selected from a group of additives, said group comprising antimicrobials, bio-stabilizers, antioxidants, antistatic agents, plasticizers, blowing agent, lubricants, fillers, heat stabilizers, light stabilizers, pigments, reinforcements, or combination thereof.

In a further embodiment of the multi-volume container according to the present invention, the first and/orthe second mantle portion are multi layered. In particular, the first and/orthe second plastic material may be a multi-layered plastic material.

For example, the first mantle portion may be constituted by a multi-layered plastic material comprising a polypropylene (PP) layer and a polyethylene terephthalate (PET) layer, the PET layer being the innermost one, i.e. the PET layer being in contact with the second mantle portion. The second mantle portion may in his case be constituted by a single-layered second plastic material, the second plastic material being e.g. polypropylene.

The invention also refers to a method for manufacturing the multi-volume container according to the present invention, wherein the multi-volume container is made from a multi-layer parison. The parison comprises at least a first component and at least a second component. In particular, the first and the second element of the multi-volume container are made from the first and the second component of the parison, respectively.

The first component has a generally tubular shape and comprises a first wall, wherein the first wall defines an interior space, a first open side and a second open side. The second component has a trough shape defining a second wall and a first open side.

At least a portion of the second component is arranged inside the interior space of the first component. In particular, the second component is entirely arranged inside the interior space. The first open side of the first component and the first open side of the second component at least partially overlap one another, e.g. they substantially coincide. The first and/or the second component may have a substantially cylindrical symmetry.

The first and/orthe second component may be made of plastic and for instance may be in a thermoplastic state. The parison may e.g. be produced via co-extrusion processes and/or via injection moulding processes, preferably a multi-component injection moulding process.

The method according to the present invention comprises at least the steps of:
a) Opening a mould;
b) Disposing the parison inside a cavity of the mould; and
c) Clamping the mould and expanding the parison to form an intermediate product.

The mould comprises the cavity, the cavity being defined by a mould surface, wherein the mould surface defines the first mantle portion. The mould surface comprises a first and a second shaping region, wherein the first and the second shaping region define the first and the second boundary regions of the multi-volume container, respectively. The mould may comprise a first inlet for injecting an injection fluid inside the cavity. At least a portion of the inlet may be arranged inside the cavity e.g. in proximity of the first shaping region.

With regards to the step of disposing the parison inside a cavity, i.e. step b), the parison is disposed inside the cavity so that the first side opening of the first component and the first side opening of the second component are arranged at the first shaping region and so that the second side opening is arranged at the second shaping region. At least a first portion of the first inlet may in particular be located inside the trough-shaped second component.

In the aforementioned step c), the parison is expanded by injecting an injection fluid into the second component of the parison to form the first mantle portion of the first element and the second mantle portion of the second element. According to the present invention, an injection fluid may for instance be a gas (e.g. air, helium, and the like), a liquid (e.g. water, oil and the like) or a liquid-gas-phase. For example, the injection fluid may be injected by means of the first portion of the first inlet.

After the expansion of the parison, the second mantle portion of the second element comprises at least a base portion. The base portion may, at least in a first step, be arranged in proximity of and/or be in contact with the second boundary region and/orthe second opening. Moreover, at least a first region of the base portion may substantially conform to the second boundary region.

The form of the cavity of the mould and the spatial arrangement of the parison inside the mould may guarantee that, afterthe expansion of the parison, a relatively large portion of the second element of the intermediate product substantially conforms to a portion of the first element of the intermediate product. Said large portion may substantially coincide with the second element deprived of the base region and may comprise the second contact portion.

In particular, the multi-volume container differs from the intermediate product by the presence of the septum providing a fluid tight separation between the first and the second opening. According to the method of the present invention, the septum may be formed from the base portion and to this end said method further comprises the step of:
d) Moving a mandrel through the second opening towards the first internal volume to displace the base portion inside the first internal volume and thereby defining the septum of the multi-volume container.

In particular, the displacement of the base portion by means of the mandrel forces a third portion the second mantle portion to be peeled off the first mantle portion. Said third portion of the second mantle portion, together with the base portion, constitutes the septum. Alternatively or in conjunction with the above, the displacement of the base portion by means of the mandrel may force a plastic deformation of the base portion, said deformation defining the septum of the multi-volume container at least in part.

In particular, the ratio between the size of the first internal volume and the size of the second internal volume may be easily tuned to e.g. be substantially equal to a desired ratio by tuning the extent of the movement of the mandrel through the second opening towards the first internal volume.

The mandrel may be a part of the mould, e.g. a movable insert of the mould. Alternatively, the mandrel may be a separate tool, which e.g. may be part of another apparatus for processing the intermediate product.

The step of moving the mandrel may be performed inside the mould, without having to eject the intermediate product from the mould and without having to insert it into another apparatus for further processing. This streamlines and simplifies the production of the multi-volume container and/or reduces the production costs. Alternatively with the above, the step of moving the mandrel may also be performed afterthe ejection of the intermediate product from the mould, i.e. when the intermediate product is not inside the mould.

According to the method of the present invention, the first and the second element are produced together and in an assembled state, i.e. they are not produced independently from each other and then assembled in a later stage of the production process. This way, the production process of the multi-volume container is simplified and streamlined and/orthe production costs are reduced.

The second element may be substantially contained inside the first element and thus the external shape of the multi-volume container according to the present invention substantially corresponds to the shape of the first element. It is thus relatively straightforward to impart a desired shape to the multi-volume container by e.g. appropriately modifying the shape of the mould surface of the mould. The desired shape may for instance substantially replicate the shape of a single volume container, which e.g. may correspond to a brand-characterising design.

In an embodiment of the method according to the present invention, the mandrel comprises at least an outlet for injecting an injection fluid inside the cavity. The outlet allows for using the injection fluid, e.g. air, to displace the base portion and thereby to contribute to the formation of the septum.

The orientation and the shape of the outlet allow for a relatively accurate controlling of the displacement of the base portion, of the shaping of the base portion, and/or of the peeling of the third portion off the first mantle portion. This may *inter alia* improve the quality of the final product and/or allow for the production of multi-volume containers comprising septa with relatively complex shape and/or fulfilling relatively demanding production requirements.

The force generating the displacement of the base portion may be relatively easily controlled by regulating the pressure and/orthe velocity of the mandrel's motion and/orthe fluid injection. Therefore, said force may be tuned in the light of the physical and/or of the structural properties of the first and/or of the second component to reduce the risk of damaging the first and/or the second element.

An embodiment of the method according to the present invention further comprises the step of:
c+) Opening the mould and ejecting the intermediate product.

For instance, step c+) may be performed after the step of expanding the parison and before the step of moving in the mandrel. According to this embodiment, the formation of the septum may be performed outside the mould, e.g. in and/or by means of a dedicated apparatus. The use of a dedicated apparatus to form the septum may *inter alia* improve the quality of the production process and/or allow for producing multi-volume containers comprising septa having relatively complex shapes and/or fulfilling relatively demanding production requirements.

Another embodiment of the method further comprises the step of:
a+) Producing the parison via a co-extrusion process and/or via an injection moulding process, preferably a multi-component injection moulding process.

For instance, step a+) may be performed afterthe step ofopeningthe mould and before the step of disposing the parison inside the mould cavity. Alternatively with the above, step a+) may be performed before the step of opening the mould.

This embodiment of the method allows for producing the multi-volume containerfrom scratch, e.g. starting from the thermoplastic resin pellets from which the parison is made. This embodiment of the method according to the present invention may be performed by means a single apparatus, said apparatus comprising e.g. a die to extrude the parison and the mould to produce the multi-volume container. This way, the production of the container is streamlined and simplified and/orthe production costs are reduced.

In yet another embodiment of the method according to the present invention, the material constituting the first component and the material constituting the second component may comprise a third and a fourth plastic material, respectively. The third and the fourth plastic material may be selected from the third group.

Alternatively with the above, the third and the fourth plastic material may have relatively bad mutual adhesion properties. For instance, if the third orthe fourth plastic material is made of polyurethane, the fourth orthe third plastic material might preferably made of a polyolefin material such as polyethylene or polypropylene, respectively. In this embodiment, the adherence forces between the third and the fourth material, and thus the adherence forces between the first and the second component, are relatively weak. This facilitates the peeling of the third portion off the first mantle portion thereby streamlining and simplifying the step of displacing the base portion by means of the mandrel. Moreover, the risk of damaging the second and/or the first mantle portion during said displacing is substantially reduced.

The first and/orthe second component may comprise further materials, or may be coated therewith, such as additives selected from the group of additives defined above.

In a further embodiment of the method according to the present invention, the first and/or the second component are multi layered. In particular, the third and/orthe fourth plastic material may be a multi-layered plastic material.

For example, the first component may be constituted by a multi-layered plastic material comprising a polypropylene (PP) layer and a polyethylene terephthalate (PET) layer, the PET layer being the innermost one, e.g. the PET layer being in contact with the second component. The second component may in his case be constituted by a single-layered fourth plastic material, the second plastic material being e.g. polypropylene.

Exemplary embodiments of the invention are described in the following with respect to the attached figures. The figures and corresponding detailed description serve merely to provide a better understanding of the invention and do not constitute a limitation whatsoever of the scope of the invention as defined in the claims. In particular:
- **Fig. 1**: is a cross sectional schematic view of a first embodiment of the multi-volume container according to the present invention;
- **Fig. 2**: is a cross sectional schematic view of a second embodiment of the multi-volume container according to the present invention;
- **Fig. 3**: is a cross sectional schematic view of a third embodiment of the multi-volume container according to the present invention;
- **Fig. 4**: is a cross sectional schematic view of a fourth embodiment of the multi-volume container according to the present invention;
- **Fig. 5**: is a cross sectional schematic view of a fifth embodiment of the multi-volume container according to the present invention;
- **Fig. 6**: is a cross sectional schematic view of the parison for use in a first embodiment of the method according to the present invention;
- **Fig. 7a**: is a first cross sectional schematic view of the mould during the performance of the first embodiment of the method accordingto the present invention;
- **Fig. 7b**: is a second cross sectional schematic view of the mould during the performance of the first embodiment of the method according to the present invention;
- **Fig. 7c**: is a third cross sectional schematic view of the mould during the performance of the first embodiment of the method accordingto the present invention; and
- **Fig. 7d**: is a fourth cross sectional schematic view of the mould during the performance of the first embodiment of the method according to the present invention.

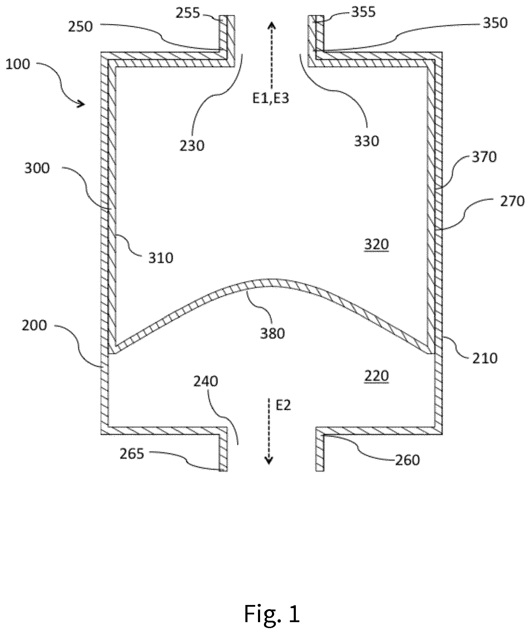

**Fig. 1** is a cross sectional schematic view of a first embodiment of the multi-volume container 100 according to the present invention. The first element 200 comprises the first mantle portion 210, the first mantle portion 210 defining the first internal volume 220 and having the first 230 and the second 240 opening. The first 230 and the second 240 opening are defined by the first 250 and by the second 260 boundary region, respectively.

The first 250 and the second 260 boundary regions are neck-shaped and comprise a first 255 and a second 265 distal region, respectively. The first 250 and the second 260 boundary region extend along a first E1 and a second E2 extension direction, respectively, wherein the first E1 and the second E2 extension direction are oriented towards the first 255 and the second 265 distal region, respectively. The first E1 and the second E2 extension direction are substantially opposite to each other, since they are offset by a substantially straight angle, and thus the first 230 and the second 240 opening are in a substantially opposing arrangement.

The second element 300 comprises the second mantle portion 310, which defines the second internal volume 320 and the third opening 330. More specifically, the third opening 330 is defined by the third boundary region 350. The third boundary region 350 is neck-shaped, comprises a third distal region 355 and extends along a third extension direction E3, the third extension direction E3 being oriented towards the third distal region 355.

The second element 300 is arranged inside the first internal volume 220. The first 200 and the second element 300 are in a substantially affixed spatial arrangement with one another so that the first opening 230 overlaps the third opening 330, e.g. the first opening 230 substantially includes the second opening.

More specifically, the third boundary 350 region is arranged inside the first opening 230 and is in intimate contact with the first boundary region 250, so as the first 250 and the third 350 boundary region are connected to each other via a fluid tight positive connection. Consequently, the first E1 and the third E3 extension direction are substantially coincident with one another. Moreover, the first contact portion 270 is in intimate contact with the second contact portion 370 and connected therewith via a fluid tight positive connection.

The substantially affixed spatial arrangement between the first 200 and the second element 300 renders the second portion 380 a septum providing a fluid tight separation between the first 230 and the second 240 opening of the first element 200.

In the first embodiment, the first 255 and/orthe second 265 distal region may be threaded. If this is the case, a first and/or a second cap (not shown) may be screwed on the first 255 and/or on the second 265 distal region to close the third 330 and/orthe second 240 opening, respectively.

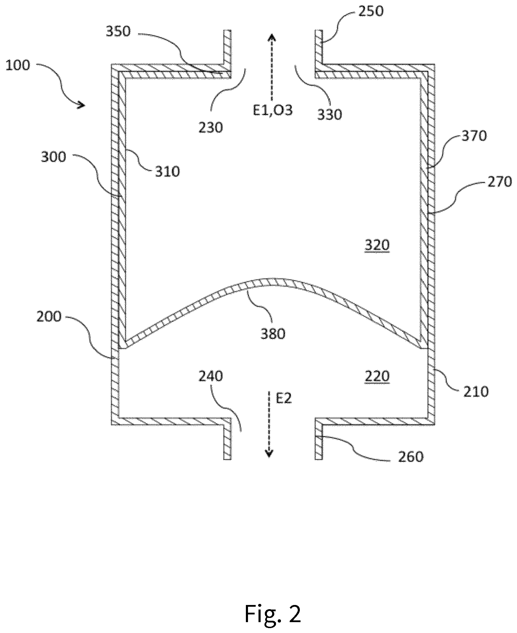

A cross sectional schematic view of a second embodiment of the multi-volume container 100 is depicted in **Fig. 2****.** The first element 200 of the second embodiment is substantially identical to the above-described first element 200 of the first embodiment (see **Fig. 1**).

The second element 300 differs from the second element of the first embodiment by the form of the third boundary region 350 and by the form of the third opening 330. The third opening 330 is a substantially flat aperture, i.e. a hole, of the second mantle portion 310 and thus the third boundary region 350 is the border region delimiting said aperture.

The first contact portion 270 is in intimate contact with the second contact portion 370 and connected therewith via a fluid tight positive connection, so that the first 230 and the third 330 opening coincide with one another. Consequently, the first extension direction E1 is substantially parallel to, e.g. coincident with, the orientation direction 03 of the third opening 330. Moreover, the second portion 380 constitutes the septum.

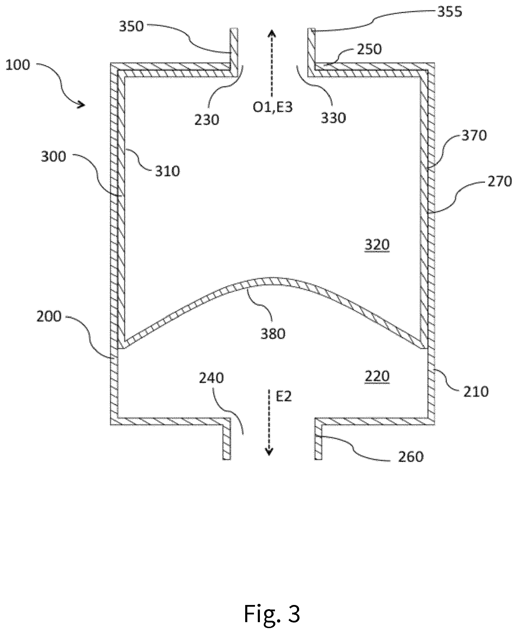

**Fig. 3** is a cross sectional schematic view of a third embodiment of the multi-volume container 100 of the present invention. The second element 300 of the third embodiment is substantially identical to the previously-described second element 300 of the first embodiment shown in **Fig. 1****.** In the third embodiment, the third distal region 355 may be threaded, so as e.g. a cap (not shown) may be screwed on it.

The first element 200 differs from the first element 200 of the first embodiment by the form of the first boundary region 250 and of the first opening 230. In particular, the first opening 230 is a substantially flat aperture in the first mantle portion 210 and thus the first boundary region 250 is the border region delimiting said aperture.

Apart from the third boundary region 350, the second element 300 is arranged inside the first internal volume 220. In particular, the first 200 and the second element 300 are in a substantially affixed spatial arrangement with one another so that the first opening 230 overlaps the third opening 330.

More specifically, the third boundary 350 region extends through the first opening 230 and is connected with the first boundary region 250 via a fluid tight positive connection. Consequently, the orientation O1 of the first opening and the third extension direction E3 are substantially coincident with one another.

Moreover, the first contact portion 270 is in intimate contact with the second contact portion 370 and connected therewith via a fluid tight positive connection. Also in this embodiment, the second portion 380 constitutes the septum.

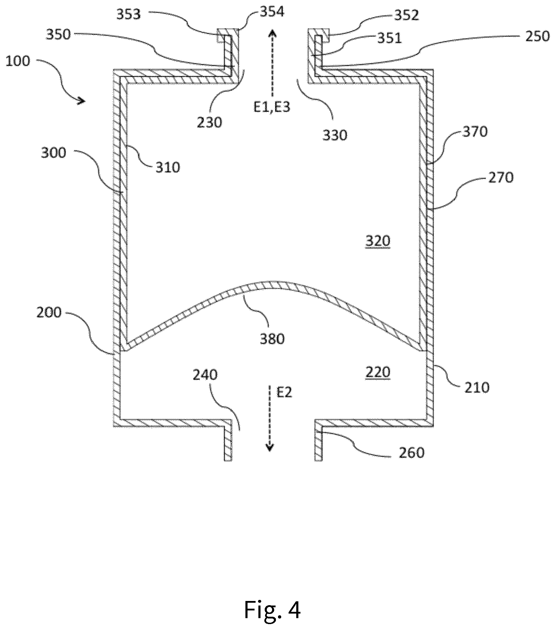

A cross sectional schematic view of a fourth embodiment of the multi-volume container 100 of the present invention is shown in **Fig. 4****.** The first element 200 of said embodiment is substantially identical to the above-described first element 200 of the first embodiment (see **Fig. 1** or **Fig. 2**).

The second element 200 differs from the second element 200 of the first embodiment by the form of the third boundary region 250. In the fourth embodiment, the third boundary region 350 is neck and collar shaped. Therefore, the third boundary region 350 comprises a collar band 351 with a distal edge 354 and a collar leaf 352. The collar leaf 352 is connected to the distal edge 354 of the collar band 351 so as to define a collar recess 353 therewith.

Apart from the collar edge 354 and the collar leaf 352, the second element 300 is arranged inside the first internal volume 220. In the fourth embodiment, the substantially affixed spatial arrangement between the first 200 and the second 300 element differs from the corresponding spatial arrangement of the first embodiment by the presence of an interlocking connection between the first 250 and the third 350 boundary region.

More specifically, the first distal region 255 of the first boundary region 250 engages the collar recess 353 of the third boundary region 350 so as to interlock the first 250 and the third 350 boundary region.

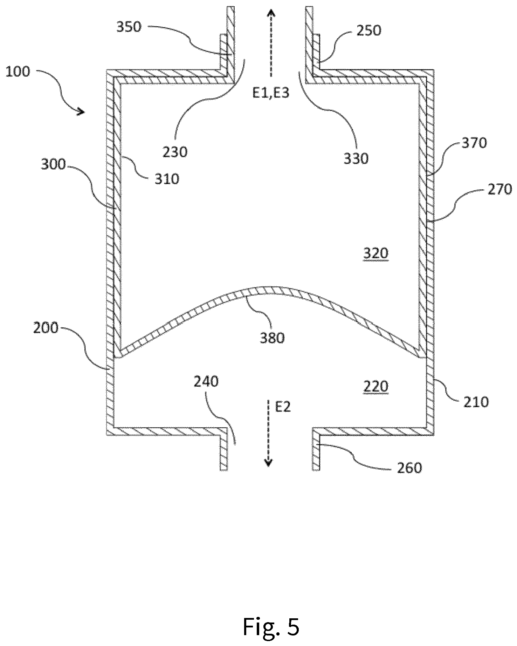

**Fig. 5** is a cross sectional schematic view of a fifth embodiment of the multi-volume container 100. The first element 200 of said embodiment is substantially identical to the first element 200 of the first embodiment (see e.g. **Fig. 1** **or** **Fig. 2**).

The second element 300 of the third embodiment differs from the second element 300 of the first embodiment by the dimensions of the third boundary region 350. More specifically, the third boundary region 350 of the fifth embodiment is longer than the one of the first embodiment and thus the third distal region 355 lies outside the first internal volume 220. Therefore, only a portion of the second element 300 is arranged inside the first internal volume 220, wherein said portion substantially corresponds to the second element 300 deprived of the third distal region 355.

In this case, the substantially affixed spatial arrangement between the first 200 and the second element 300 exhibits the above-described features of the corresponding spatial arrangement of the first embodiment of the multi-volume container 100.

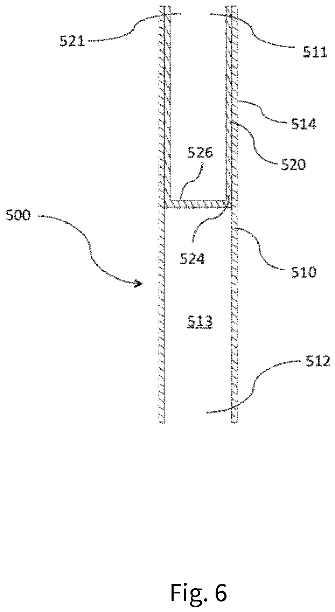

**Fig. 6** shows a cross sectional schematic view of the multi-layer parison 500 for use in a first embodiment of the method according to the present invention. More specifically, the first embodiment of the multi-volume container 100 can be made from the parison 500 by performing the first embodiment of the method according to the present invention.

The parison 500 comprises a first component 510 and a second component 520. In particular, the first 200 and the second element 300 of the multi-volume container 100 are made from the first 510 and the second component 520 of the parison 500, respectively.

The first component 510 has a generally tubular shape and has a first wall 514, the first wall 514 defining an interior space 513, a first open side 511 and a second open side 512. The second component 520 of the parison has a trough shape defining a second wall 524, and a first open side 521. The second wall 524 comprises a bottom side 526, wherein the bottom side 526 and first open side 521 of the second component 520 are in a substantially opposing arrangement.

The second component 520 is arranged inside the interior space 513 of the first component 510. The first open side 511 of the first component 510 and the first open side 521 of the second component 520 overlap one another, e.g. substantially coincide with one another.

The first and/orthe second component may have a substantially cylindrical symmetry. They may be made of plastic and may in particular be in a thermoplastic state. The parison may e.g. be produced via co-extrusion processes and/or via multi-component injection moulding processes.

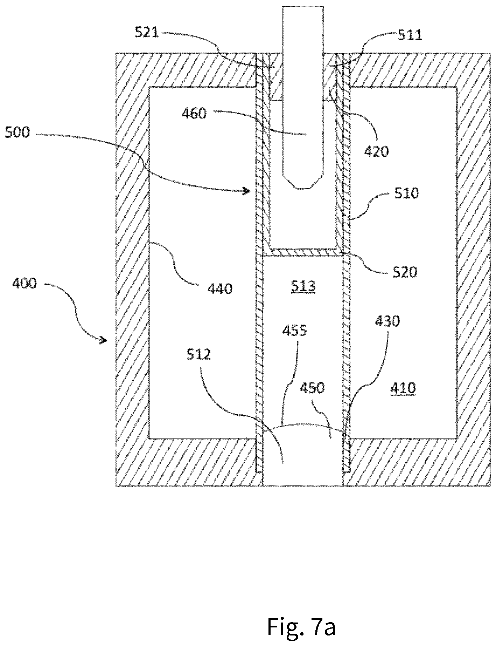

Several cross sectional schematic views of the mould 400 during the performance of the first embodiment of the method according to the present invention are shown in **Figs. 7a** to **7d**.

As shown in **Figs. 7a** to **7d**, the mould 400 comprises the cavity 410 defined by the mould surface 440. The mould surface 440 defines the first mantle portion 210 and comprises the first 420 and the second 430 shaping region. The first 420 and the second 430 shaping regions define the first 250 and the second 260 boundary region of the multi-volume container 100, respectively.

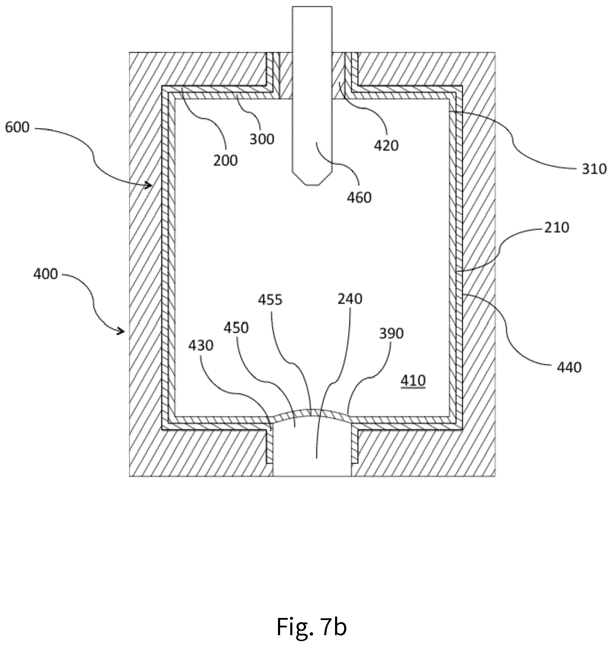

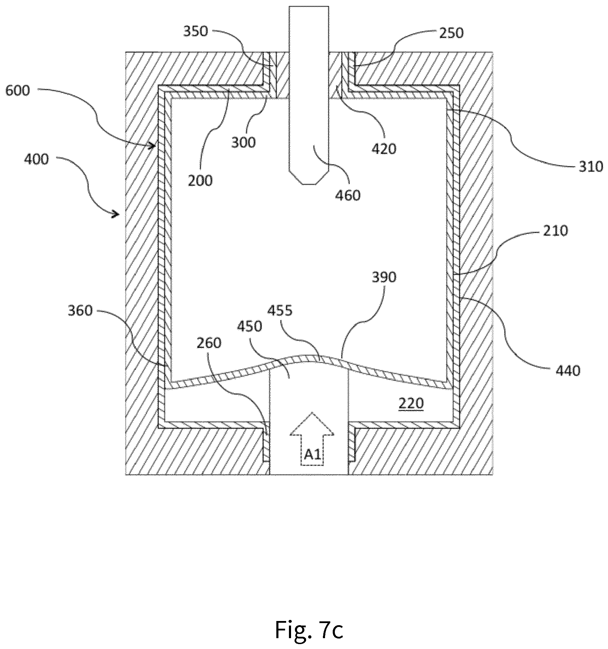

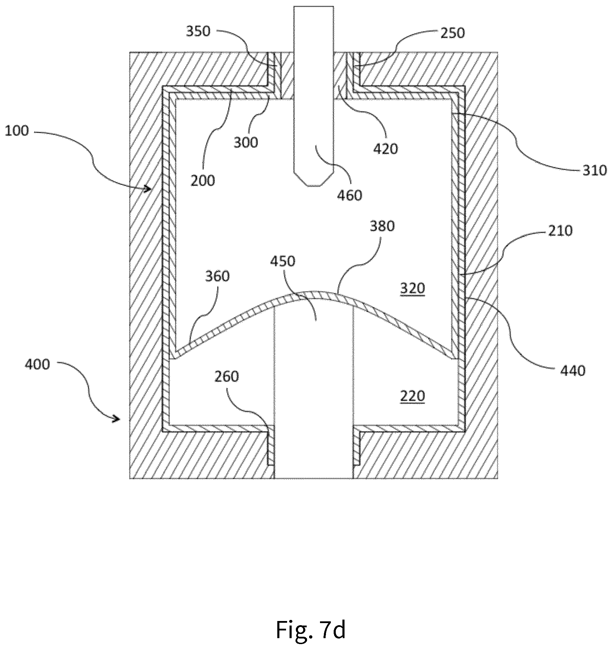

Moreover, the mould 400 comprises the movable mandrel 450, the mandrel having a mandrel surface 455. In **Fig. 7a** and in **Fig. 7b****,** the mandrel is in an injecting position, the injecting position being arranged in proximity of the second shaping region 430. In this position, the mandrel surface constitutes a portion of the mould surface 440. In **Fig. 7c****,** the mandrel 450 moves along the direction shown by the arrow A1 and in **Fig. 7d****,** the mandrel is in its final position, i.e. in the position in correspondence to which the septum 380 of the first embodiment of the multi-volume container 100 is formed.

The mould 400 further comprises the first inlet 460 for injecting an injection fluid (e.g. air) inside the cavity 410. At least the first portion of the first inlet 460 is arranged inside the cavity, in proximity of the first shaping region 420.

The first embodiment of the method according to the present invention comprises the step of opening the mould 400 and the step of disposing the parison 500 inside the cavity 410 of the mould 400. The arrangement of the parison 500 inside the cavity 410 is best shown in **Fig. 7a**. The first side opening 511 of the first component 510 and the first side opening 521 of the second component 520 are arranged at the first shaping region 420, while the second side opening 512 is arranged at the second shaping region 430. At least the first portion of the first inlet 460 is located inside the trough-shaped second component 520.

After the step of disposing the parison 500, the mould 400 is clamped and the parison 500 is expanded to form the intermediate product 600, as best shown in **Fig. 7b****.** The expansion of the parison 500 is achieved by injecting an injection fluid (e.g. air) through the first inlet 460 into the second component 520 to form the first 210 and the second 310 mantle portion.

After the expansion of the parison, the second mantle portion 310 comprises at least a base portion 390, which is arranged in proximity of the second opening 240. A part of the base portion 390 is in contact with the mandrel surface 455 and conforms thereto.

After the expansion of the parison 500, a relatively large portion of the second element 300 of the intermediate product 600 substantially conforms to a portion of the first element 200 of the intermediate product 100. Said large portion substantially corresponds to the second element 300 deprived of the base portion 390.

The first embodiment of the multi-volume container 100 differs from the intermediate product 600 by the presence of the septum 380. As shown in **Fig. 7c****,** the septum 380 may be formed from the base portion 390 by performing the step of moving the mandrel 450 through the second opening 240 towards the first internal volume 220, e.g. along the direction shown by the arrow A1. The movement of the mandrel 450 displaces the base portion 390 inside the first internal volume 220 and allows for defining the septum 380.

More specifically, the septum 380 is formed when the mandrel 450 reaches its final position, see **Fig. 7d****.** In particular, the displacement of the base portion 390 by means of the mandrel450 forces a third portion 360 the second mantle portion 310 to be peeled off the first mantle portion 210. The third portion 360, together with the base portion 390, constitutes the septum 380. The displacement of the base portion 390 by means of the mandrel 450 may force a plastic deformation of the base portion 390, said deformation defining the shape of septum 380 at least in part.

## Claims

1. A multi-volume Container (100) made of a first (200) and at least a second (300) element,
wherein
the first element (200) comprises a first mantle portion (210), the first mantle portion (210) defining a first internal volume (220) and having a first (230) and a second (240) opening, the first (230) and a second (240) opening being defined by a first (250) and a second (260) boundary region, respectively, and
the second element (300) comprises a second mantle portion (310), the second mantle portion (310) defining a second internal volume (320) and having a third opening (330), the third opening (330) being defined by a third boundary region (350), wherein
at least a portion of the second element (300) is arranged inside the first internal volume (220), and the first element (200) and the second element (300) are in a substantially fixed spatial arrangement relative to one another so that the first opening (230) at least partially overlaps the third opening (330), wherein
at least a first portion (270) of the first mantle portion (210) is in intimate contact with at least a first portion (370) of the second mantle portion (310), and
at least a second portion (380) of the second mantle portion (310) constitutes a septum providing a fluid tight separation between the first (230) and the second (240) opening of the first element (200).

2. Multi-volume container (100) according to claim 1, wherein the septum (380) is located inside the first internal volume (220).

3. Multi-volume container (100) according to claim 1 or 2, wherein the first (230), the second (240), and/orthe third (330) opening are substantially circular or substantially cylindrical.

4. Multi-volume container (100) according to anyone of the previous claims, wherein the first (250), the second (260), and/orthe third (350) boundary region are neck shaped.

5. Multi-volume container (100) according to anyone of the previous claims, wherein the first (250), the second (260), and/orthe third (350) boundary region are shaped as a collar.

6. Multi-volume container (100) according to anyone of the previous claims, wherein the first (250) and the third (350) boundary region are interlocked with and/orform-fit connected to each other.

7. Multi-volume container (100) according to anyone of the previous claims, wherein the first (230) and the second opening (240) are in a substantially opposing spatial arrangement.

8. Multi-volume container (100) according to anyone of the previous claims, wherein at least a portion of the first (200) and/or the second elements are made of an elastic material.

9. Multi-volume container (100) according to anyone of the previous claims, further comprising a first closing element, wherein the first (230) and/or the third (330) opening is sealable by means of the first closing element, and/or a second closing element, wherein the second opening (240) is sealable by means of the second closing element.

10. Multi-volume container (100) according to any one of the previous claims, wherein the material constituting the first element (200) and/or the material constituting the second element (300) includes a first and a second plastic material, respectively, wherein
the first and the second plastic materials are selected from a group comprising a High Density Polyethylene, Low Density Polyethylene, Polyethylene, Terephthalate, Polyvinyl Chloride, Polycarbonate, Polypropylene, Polystyrene, Fluorine Treated, Post Consumer Resin, K-Resin, Bio-plastic, or combinations thereof.

11. Multi-volume container (100) according to anyone of the previous claims, wherein the first and/orthe second mantle portion are multi layered.

12. Method for manufacturing a multi-volume container (100) according to any one of the previous claims, the multi-volume container (100) being made from a multi-layer parison, wherein
the parison (500) comprises at least a first component (510), the first component (510) having a generally tubular shape and having a first wall (514) defining an interior space (513), a first (511) and a second (512) open side, and wherein
the parison (500) comprises at least a second component (520), the second component (520) having a trough shape defining a second wall (524) and a first open side (521), wherein
at least a portion of the second component (520) is arranged inside the interior space (513) of the first component (510), and wherein the first open side (511) of the first component (510) and the first open side (521) of the second component (520) at least partially overlap with one another,
wherein the method comprises at least the steps of:
a) opening a mould (400) comprising a cavity (410) defined by a mould surface (440), wherein the mould surface defines the first mantle portion (210) and comprises a first (420) and a second (430) shaping region, the first (420) and the second (430) shaping regions defining the first (250) and the second (260) boundary region of the multi-volume container (100), respectively;
b) disposing the parison (500) inside the cavity (410), so that the first side opening (511) of the first component and the first side opening (521) of the second component are arranged at the first shaping region (420) and the second side opening (512) is arranged at the second shaping region (430);
c) clamping the mould (400) and expanding the parison (500) to form and intermediate product (600) by injecting an injection fluid into the second component (520) to form the first (210) and the second (310) mantle portion (210) wherein the second mantle portion (310) comprises a at least a base portion (390);
d) moving a mandrel (450) through the second opening (240) towards the first internal volume (220) to displace the base portion (390) inside the first internal volume (220) and thereby defining the septum (380) of the multi-volume container (100).

13. Method according to the previous claim, wherein the mandrel (450) comprises at least an outlet for injecting an injection fluid into the cavity.

14. Method according to claim 11 or 12, further comprising the step of:
c+) opening the mould (400) and ejecting the intermediate product (600) prior to step d).
